Europäisches Patentamt

(19) European Patent Office

Office européen des brevets

(11) Veröffentlichungsnummer: **0 268 096**

**A1**

(12) **EUROPÄISCHE PATENTANMELDUNG**

(21) Anmeldenummer: 87115385.4

(22) Anmeldetag: 21.10.87

(51) Int. Cl.⁴: **B23Q 1/28** , B23D 47/04

(30) Priorität: 23.10.86 DE 3636050

(43) Veröffentlichungstag der Anmeldung:
25.05.88 Patentblatt 88/21

(84) Benannte Vertragsstaaten:
**AT BE CH DE ES FR GB IT LI NL SE**

(71) Anmelder: **Chr. Eisele Maschinenfabrik GmbH & Co. KG.**
**Nürtinger Strasse 9 - 15**
**D-7316 Köngen(DE)**

(72) Erfinder: **Faig, Paul**
**Austrasse 82**
**D-7441 Unterensingen(DE)**

(74) Vertreter: **Hoeger, Stellrecht & Partner**
**Uhlandstrasse 14c**
**D-7000 Stuttgart 1(DE)**

(54) **Kreissägemaschine.**

(57) Eine Kreissägemaschine weist eine Werkstückauflage und eine aus Spannarm (8) und Spannblock (12) bestehende Spanneinrichtung (5) zum Festspannen von Werkstücken auf, wobei die Spanneinrichtung in einer Profilnut (16) mit Hilfe von Nutensteinen (14, 15) verschiebbar und festklemmbar ist. Die Nutensteine können mit ersten Schrägflächen (17, 18) an entsprechenden zweiten Schrägflächen (19, 20) des Spannblocks gleiten. Die Gleitbewegung kann mittels einer die beiden Nutensteine (14, 15) verbindenden Schraubspindel (22) ausgelöst werden. Gleiten die Nutensteine nach aufwärts, erfolgt eine Verklemmung der Spanneinrichtung in der Profilnut. Bei entgegengesetzter Gleitrichtung löst sich die Klemmung wieder.

FIG. 2

EP 0 268 096 A1

## Kreissägemaschine

Die Erfindung betrifft eine Kreissägemaschine mit einem Maschinengestell, einer Werkstückauflage, einem rotierend angetriebenen Kreissägeblatt und mit einer aus einem Spannarm und einem Spannblock bestehenden Spanneinrichtung zum Festspannen von Werkstücken auf der Werkstückauflage, wobei der Spannblock am Maschinengestell in einer Profilnut und mittels wenigstens eines in diese Profilnut eingreifenden Nutensteins relativ zum Kreissägeblatt verschiebbar und festklemmbar ist.

Bei einer bekannten Kreissägemaschine dieser Art (DE-OS 33 06 743) greift in die Profilnut nur ein einziger Nutenstein an, der über einen Exzenter festklemmbar ist. Hierdurch kann die Spanneinrichtung häufig nicht mit der erforderlichen Präzision und Kraft festgeklemmt werden.

Es ist Aufgabe der Erfindung, die Spanneinrichtung bei einer gattungsgemäßen Kreissägemaschine so abzuändern, daß eine stärkere und präzisere Festklemmung erreichbar ist.

Die Aufgabe wird erfindungsgemäß dadurch gelöst, daß in der Profilnut in gegenseitigem Abstand zwei Nutensteine angeordnet sind, daß die Nutensteine einander zugewandte, quer zur Profilnut verlaufende, erste Schrägflächen aufweisen, daß am Spannblock zweite, zu den ersten parallele Schrägflächen ausgebildet sind, auf denen jeweils ein Nutenstein mit seiner ersten Schrägfläche aufliegt, und daß eine den Spannblock frei durchdringende Schraubspindel mit ihrem einen Ende an dem einen Nutenstein drehbar und axial unverschieblich abgestützt ist, während ihr anderes Ende in ein Innengewinde des anderen Nutensteins eingreift, so daß sich beim Verdrehen der Schraubspindel der Abstand zwischen den Nutensteinen ändert und die Nutensteine mit ihren ersten Schrägflächen zwecks Verklemmung in der Profilnut auf den zweiten Schrägflächen des Spannblocks aufgleiten.

Die nachstehende Beschreibung einer bevorzugten Ausführungsform der Erfindung dient im Zusammenhang mit beiliegender Zeichnung der weiteren Erläuterung. Es zeigen:

Fig. 1 eine schaubildliche Ansicht einer Kreissägemaschine mit Spanneinrichtung;

Fig. 2 eine schaubildliche Ansicht der Spanneinrichtung;

Fig. 3 eine teilweise geschnittene Ansicht der Spanneinrichtung in Richtung des Pfeiles A in Fig. 2 und

Fig. 4 eine Schnittansicht entlang der Linie 4-4 in Fig. 3.

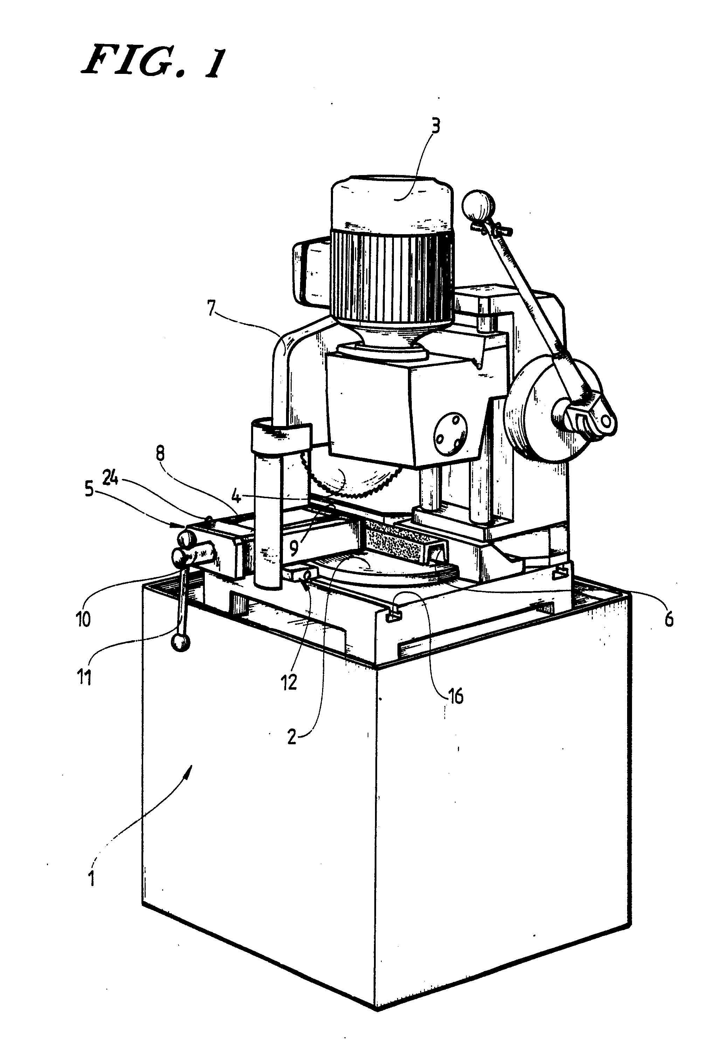

Die in Fig. 1 dargestellte Kreissägemaschine weist ein Maschinengestell 1, eine Werkstückauflage 2, ein rotierend von einem Motor 3 angetriebenes Kreissägeblatt 4 und eine Spanneinrichtung 5 zum Festspannen eines Werkstückes 6, beispielsweise eines U-Trägers auf der Werkstückauflage 2 auf. Das Kreissägeblatt 4 ist in herkömmlicher Weise von einem Schutzkasten 7 abgedeckt und kann in einer Führung gemeinsam mit dem Motor 3 auf-und abbewegt werden, so daß das rotierende Sägeblatt 4 den gewünschten Schnitt im Werkstück 6 ausführt.

Bei der in Fig. 1 dargestellten Anordnung wird das Werkstück 6 senkrecht zu seiner Längsachse zersägt. Das Sägeblatt 4 kann jedoch bei Maschinen dieser Art einschließlich seiner Lagerung und seines Antriebsmotors 3 auch derart verstellbar sein, daß am Werkstück 6 Gehrungsschnitte in einem von 90° verschiedenen Winkel ausgeführt oder längsachsparallele Schlitze eingesägt werden können. Hierzu ist die Sägeblattanordnung um eine senkrecht zur Werkstückauflage 2 verlaufende Achse in an sich bekannter und deshalb nicht eigens dargestellter und beschriebener Weise drehbar.

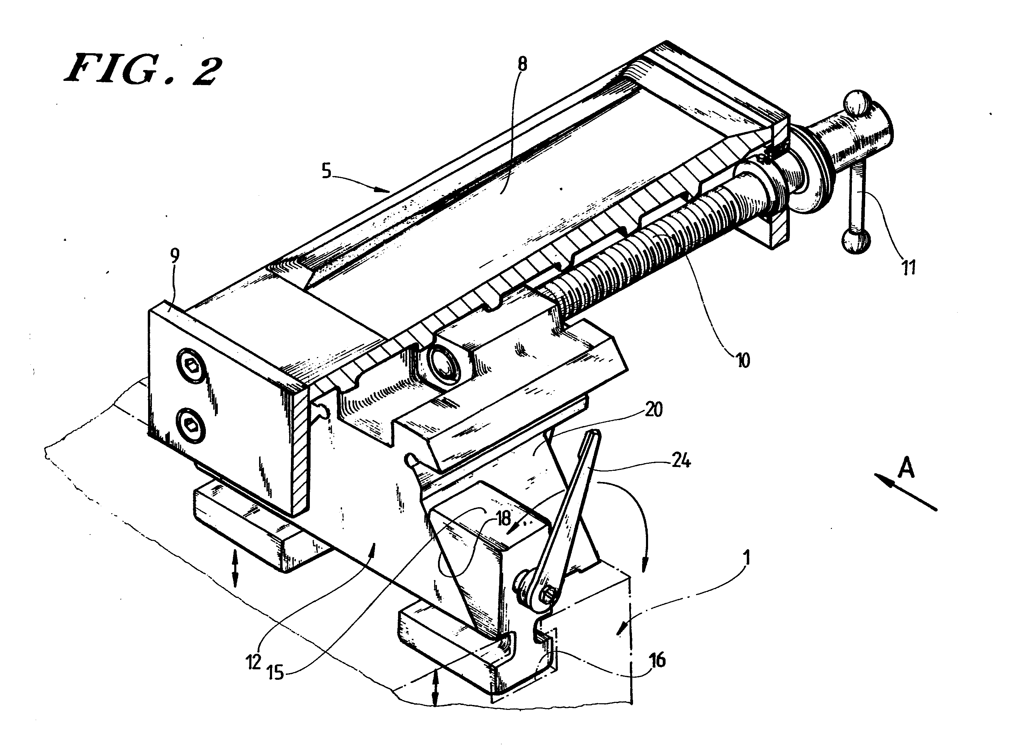

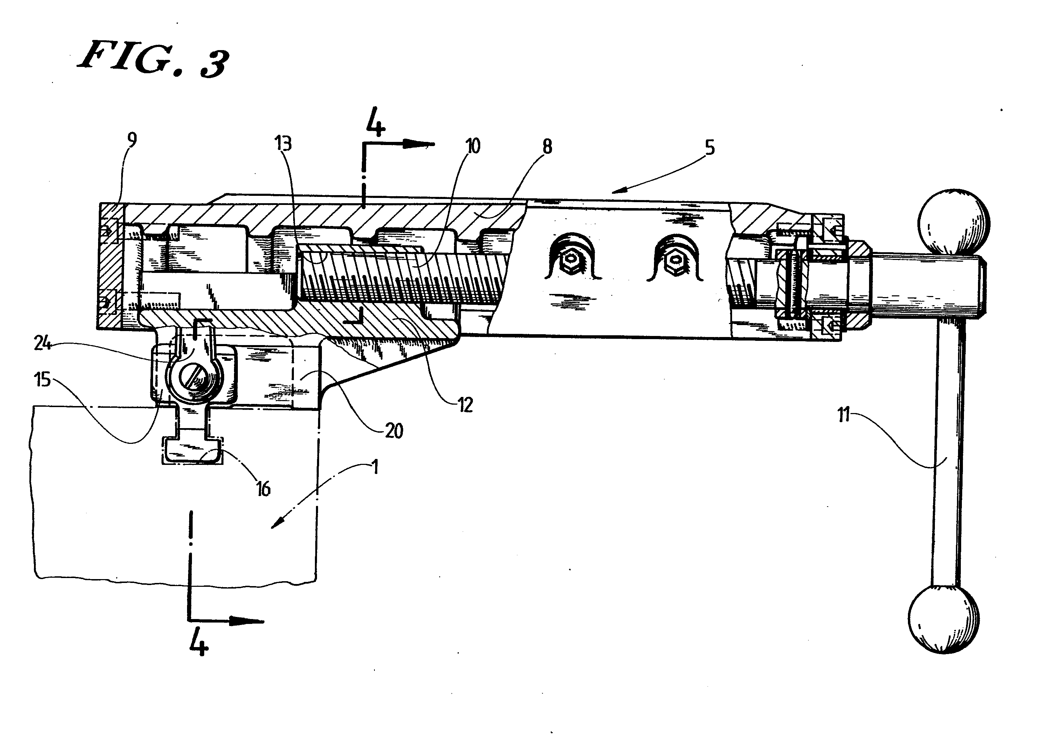

Die Spanneinrichtung 5 (vgl. insbesondere Fig. 2 und 3) umfaßt in herkömmlicher Weise einen hohl ausgebildeten Spannarm 8 mit einer am Werkstück 6 angreifenden Anschlagplatte 9. Im Inneren des Spannarms 8 ist eine Schraubspindel 10 drehbar und axial unverschieblich gelagert. Die Schraubspindel 10 ragt mit ihrem einen (in Fig. 1 links gelegenen) Ende über den Spannarm 8 hinaus und weist dort den üblichen, querverschieblichen Betätigungsarm 11 auf.

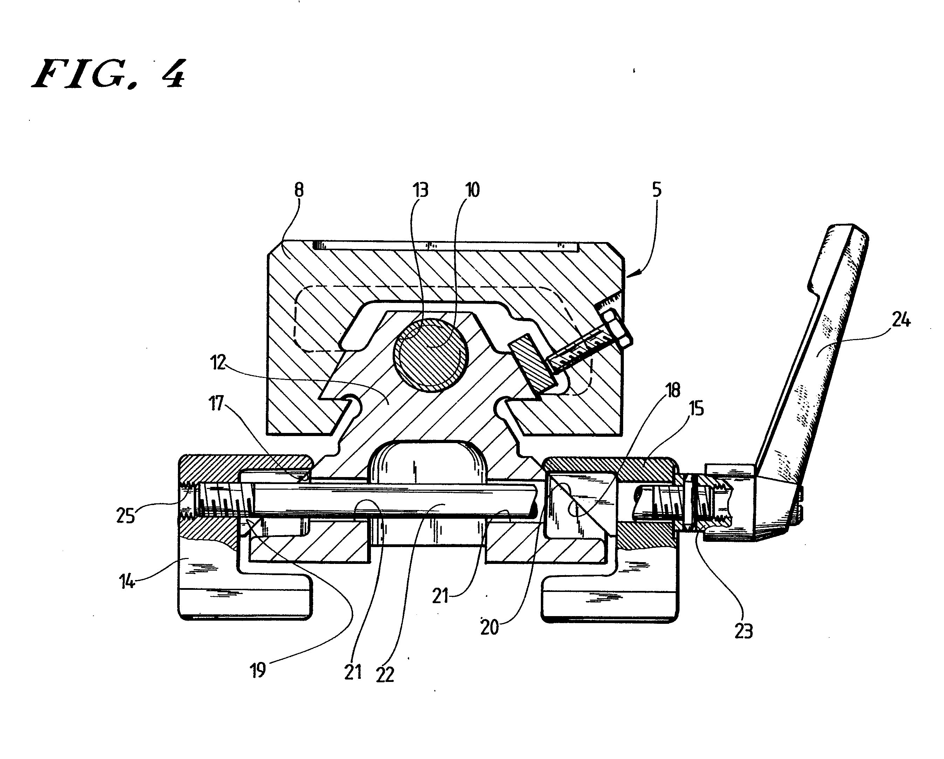

Der Spannarm 8 ist in bekannter Weise auf einem Spannblock 12 parallel zur Achse der Schraubspindel 10 gleitverschieblich gelagert, wie am besten aus Fig. 2 und 4 ersichtlich. Das dem Betätigungsarm 11 gegenüberliegende Ende der Schraubspindel 10 greift in ein Innengewinde 13 des Spannblocks 12 ein. Wenn somit die Schraubspindel 10 verdreht wird, verschiebt sich der Spannarm 8 relativ zum ortsfest gehaltenen Spannblock 12, um auf diese Weise das Werkstück 6 gegen ein der Anschlagplatte 9 gegenüberliegendes Teil des Maschinengestells 1 zu klemmen.

Dem Spannblock 12 sind zwei bewegliche Nutensteine 14, 15 zugeordnet, die in eine zum Querschnittsprofil dieser Steine 14, 15 komplementär ausgebildete Profilnut 16 im Maschinengestell 1 hineinragen. Die Nutensteine 14 und 15 sowie die Profilnut 16 können, wie dargestellt, ein T-Profil aufweisen, sie könnten jedoch auch mit dem üblichen schwalbenschwanzförmigen oder einem anderen Querschnittsprofil versehen sein.

Wie insbesondere aus Fig. 2 und 4 ersichtlich ist, weist jeder Nutenstein 14, 15 einander zugewandte, quer zur Profilnut 16 verlaufende, erste Schrägflächen 17 bzw. 18 auf, die beispielsweise mit 45° geneigt zur Horizontalen verlaufen. Mit diesen ersten Schrägflächen 17, 18 ruhen die Nutensteine 14, 15 gleitverschieblich auf entsprechenden, zweiten Schrägflächen 19, 20 des Spannblocks 12 auf. Der Spannblock 12 weist eine relativ weite, quer zur Längsachse der Schraubspindel 10 verlaufende Bohrung 21 auf, die von einer weiteren Schraubspindel 22 derart frei durchquert ist, daß sich die Spindel 22 (in Fig. 4) um eine bestimmte Strecke (in der Zeichnungsebene) auf und ab bewegen kann. Die Schraubspindel 22 liegt mit einem aufgeschraubten und mit ihr verkeilten Ansatzstück 23 an der freien Stirnseite des Nutensteins 15 derart an, daß die Spindel 22 an diesem Nutenstein 15 drehbar und axial (in Fig. 4 nach links) unverschieblich abgestützt ist. Mittels eines mit der Schraubspindel 22 fest verbundenen Klemmhebels 24 kann die Schraubspindel 22 verdreht werden. Mit ihrem dem Klemmhebel 24 gegenüberliegenden Ende greift die Schraubspindel 22 in ein Innengewinde 25 des Nutensteins 14 ein.

Wenn die Schraubspindel 22 durch Verschwenken des Klemmhebels 24 verdreht wird, - schraubt sich das freie Ende dieser Spindel in das Innengewinde 25 des Nutensteins 14 ein, so daß dieser sich hierdurch dem Nutenstein 15 annähert. Da beide Nutensteine über ihre Schrägflächen 17, 18 an den Schrägflächen 19, 20 des Spannblocks 12 abgestützt sind und die Schraubspindel 22 innerhalb der Bohrung 22 ausreichend radiales Spiel hat, können somit die Nutensteine 14, 15 auf den Flächen 19, 20 je nach Drehrichtung der Spindel 22 auf-und abgleiten. Bei einem aufwärts gerichteten Gleiten verspannen sich die Nutensteine 14, 15 aufgrund ihres T-förmigen Profils in der korrespondierenden Profilnut 16 und klemmen somit über den Spannblock 12 die gesamte Spanneinrichtung 5 am Maschinengestell 1 fest. Bei Verdrehung der Schraubspindel 22 in entgegengesetzter Richtung entfernen sich die beiden Nutensteine 14, 15 voneinander, wobei sie auf den Schrägflächen 19, 20 nach abwärts gleiten. Hierdurch wird die Klemmung der Spanneinrichtung gelöst, so daß sie in der Profilnut 16 verschoben, neu positioniert und wieder fixiert werden kann.

Die beiden Nutensteine 14, 15 vermitteln auf diese Weise an zwei relativ voneinander weit abgelegenen Stellen eine Klemmung der Spanneinrichtung 5 in der Profilnut 16. Diese Klemmung ist genauer und kann mit größerer Kraft erfolgen als bei bekannten Anordnungen, wo lediglich ein einziger klemmender Nutenstein etwa in der Mitte des Spannblocks 12 (Fig. 4) vorgesehen ist, der zudem noch durch einen Exzenter und nicht durch Schrägflächen verschoben wird. Die Schrägflächen 17, 18 bzw. 19, 20 können mit ihrer Neigung so eingestellt werden, daß ein feinfühlige Festklemmung mit großer Kraft erreicht werden kann.

Wie dargestellt und beschrieben verläuft die Schraubspindel 22 parallel zur Profilnut 16 und damit auch quer zur Schraubspindel 10. Der Klemmhebel 24 ist im Bereich einer quer zur Nut 16 verlaufenden Stirnfläche des Nutensteins 15, also seitlich am Spannblock 12 angeordnet. Die entsprechende Stirnfläche des am Spannblock 12 gegenüberliegenden Nutensteins 14 ist frei, so daß dort Zusatzteile, beispielsweise ein zweiter Spannarm angeordnet werden können.

## Ansprüche

Kreissägemaschine mit einem Maschinengestell, einer Werkstückauflage, einem rotierend angetriebenen Kreissägeblatt und mit einer aus Spannarm und Spannblock bestehenden Spanneinrichtung zum Festspannen von Werkstücken auf der Werkstückauflage, wobei der Spannblock am Maschinengestell in einer Profilnut und mittels wenigstens eines in diese Nut eingreifenden Nutensteins relativ zum Kreissägeblatt verschiebbar und festklemmbar ist, **dadurch gekennzeichnet,** daß in der Profilnut (16) in gegenseitigem Abstand zwei Nutensteine (14, 15) angeordnet sind, daß die Nuten steine (14, 15) einander zugewandte, quer zur Profilnut (16) verlaufende, erste Schrägflächen (17, 18) aufweisen, daß am Spannblock (12) zweite, zu den ersten parallele Schrägflächen (19, 20) ausgebildet sind, auf denen jeweils ein Nutenstein (14, 15) mit seiner ersten Schrägfläche (17, 18) aufliegt, und daß eine den Spannblock (12) frei durchdringende Schraubspindel (22) mit ihrem einen Ende an dem einen Nutenstein (15) drehbar und axial unverschieblich abgestützt ist, während ihr anderes Ende in ein Innengewinde (25) des anderen Nutensteins (14) eingreift, so daß sich beim Verdrehen der Schraubspindel (22) der Abstand zwischen den Nutensteinen (14, 15) ändert und die Nutensteine (14, 15) mit ihren ersten Schrägflächen (17, 18) zwecks Verklemmung in der Profilnut (16) auf den zweiten Schrägflächen (19, 20) des Spannblocks aufgleiten.

# FIG. 1

FIG. 2

# FIG. 3

0 268 096

# FIG. 4

0 268 096

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-3 306 743 (EISELE)<br>* Anspruch 1; Figuren 3-5 *<br>--- | 1 | B 23 Q 1/28<br>B 23 D 47/04 |
| Y | DE-C- 855 790 (HAHN & KOLB)<br>* Seite 2, Zeilen 81-100; Figuren 5,6 *<br>--- | 1 | |
| A | CH-A- 386 208 (EISELE)<br>* Seite 2, Zeilen 20-27; Figur 1 *<br>--- | 1 | |
| A | US-A-4 494 591 (FOLKERTH)<br>* Anspruch 1; Figuren 2-4 *<br>--- | 1 | |
| A | US-A-2 687 188 (COURTOIS)<br>* Spalte 2, Zeile 39 - Spalte 3, Zeile 20; Figuren 2-5 *<br>----- | 1 | |

**RECHERCHIERTE SACHGEBIETE (Int. Cl.4)**

B 23 D 45/14
B 23 D 47/00
B 23 Q 1/28
B 23 Q 3/02
B 25 B 1/00

Der vorliegende Recherchenbericht wurde für alle Patentansprüche erstellt

| Recherchenort | Abschlußdatum der Recherche | Prüfer |
|---|---|---|
| BERLIN | 18-01-1988 | MARTIN A E W |